# EUROPEAN PATENT APPLICATION

(11) **EP 4 641 733 A1**
(43) Date of publication of application: **29.10.2025**
(21) Application number: 23906569.1
(22) Date of filing: 20.11.2023
(51) Int. Cl.: H01M 10/0562, H01M 10/052

(54) **BINDER COMPOSITION FOR ALL-SOLID-STATE SECONDARY BATTERIES, SLURRY COMPOSITION FOR ALL-SOLID-STATE SECONDARY BATTERIES, SOLID ELECTROLYTE-CONTAINING LAYER, AND ALL-SOLID-STATE SECONDARY BATTERY**

(30) Priority: 20.12.2022 JP 2022203720
(71) Applicant: Zeon Corporation, Tokyo 100-8246 (JP)
(72) Inventor: MATSUO, Yusaku, Tokyo 100-8246 (JP)
(74) Representative: Maiwald GmbH
(86) International application number: PCT/JP2023/041684
(87) International publication number: WO 2024/135200

(57) **Abstract**

Provided is a binder composition for an all-solid-state secondary battery that can impart excellent dispersibility and preservation stability to a slurry composition for an all-solid-state secondary battery in which a sulfide inorganic solid electrolyte is used as a solid electrolyte and that can also cause a solid electrolyte-containing layer formed using the slurry composition for an all-solid-state secondary battery to display excellent ion conductivity. The binder composition for an all-solid-state secondary battery in which a sulfide inorganic solid electrolyte is used contains a polymer including a (meth)acrylic acid alkyl ester monomer unit and an acetic acid ester solvent in which a hydrocarbon group having a carbon number of 6 to 9 is bonded to a non-carbonyl oxygen atom. The (meth)acrylic acid alkyl ester monomer unit includes a first (meth)acrylic acid alkyl ester monomer unit in which an alkyl group having a carbon number of 3 to 8 is bonded to a non-carbonyl oxygen atom and a second (meth)acrylic acid alkyl ester monomer unit in which an alkyl group having a carbon number of 1 to 2 is bonded to a non-carbonyl oxygen atom. A mass ratio of the first (meth)acrylic acid alkyl ester monomer unit relative to the second (meth)acrylic acid alkyl ester monomer unit is 2.1 to 2.5.

## Description

### TECHNICAL FIELD

The present disclosure relates to a binder composition for an all-solid-state secondary battery, a slurry composition for an all-solid-state secondary battery, a solid electrolyte-containing layer, and an all-solid-state secondary battery.

### BACKGROUND

Demand for secondary batteries such as lithium ion secondary batteries has been increasing in recent years for various applications such as mobile information terminals, mobile electronic devices, and other mobile terminals, and also domestic small power storage devices, motorcycles, electric vehicles, and hybrid electric vehicles. This expansion of applications of secondary batteries has been accompanied by demand for further improvement of secondary battery safety.

Consequently, all-solid-state secondary batteries in which a solid electrolyte is used instead of an organic solvent electrolyte having high flammability and high risk of catching fire upon leakage are attracting interest as secondary batteries having high safety. Examples of solid electrolytes that can be used include inorganic solid electrolytes such as sulfide inorganic solid electrolytes and oxide inorganic solid electrolytes; and polymeric solid electrolytes such as polyethylene oxide and polypropylene oxide. These solid electrolytes may be contained inside of an all-solid-state secondary battery as a solid electrolyte-containing layer (electrode mixed material layer or solid electrolyte layer) in which components such as the solid electrolyte are bound by a binder, for example.

A solid electrolyte-containing layer such as described above is formed using a slurry composition for a solid electrolyte-containing layer that is produced using a binder composition containing a polymer as a binder and a solvent.

For example, an electrode mixed material layer can be formed through removal of a solvent from a slurry composition for an electrode mixed material layer that contains a binder composition, a solid electrolyte, and an electrode active material. Moreover, a solid electrolyte layer can be formed, for example, through removal of a solvent from a slurry composition for a solid electrolyte layer that contains a binder composition and a solid electrolyte.

Improvements are being made to binder compositions and techniques for forming solid electrolyte-containing layers using binder compositions in order to improve the performance of all-solid-state secondary batteries (for example, refer to Patent Literature (PTL) 1 and 2).

### CITATION LIST

### Patent Literature

PTL 1: JP2010-205449A
PTL 2: JP2019-91632A

### SUMMARY

### (Technical Problem)

However, in a situation in which a sulfide inorganic solid electrolyte is used as a solid electrolyte, the conventional binder compositions described above leave room for improvement in terms of increasing dispersibility and preservation stability of a slurry composition and also increasing ion conductivity of a solid electrolyte-containing layer formed using the slurry composition.

Accordingly, one object of the present disclosure is to provide a binder composition for an all-solid-state secondary battery that can impart excellent dispersibility and preservation stability to a slurry composition for an all-solid-state secondary battery in which a sulfide inorganic solid electrolyte is used as a solid electrolyte and that can also cause a solid electrolyte-containing layer formed using the slurry composition for an all-solid-state secondary battery to display excellent ion conductivity.

Another object of the present disclosure is to provide a slurry composition for an all-solid-state secondary battery that has excellent dispersibility and preservation stability and that can also form a solid electrolyte-containing layer having excellent ion conductivity.

Yet another object of the present disclosure is to provide a solid electrolyte-containing layer that has excellent ion conductivity and an all-solid-state secondary battery that includes the solid electrolyte-containing layer.

### (Solution to Problem)

The inventor conducted diligent investigation with the aim of solving the problems set forth above. The inventor made a new discovery that the problems set forth above can be solved with a binder composition for an all-solid-state secondary battery that contains a polymer including two specific types of (meth)acrylic acid alkyl ester monomer units in a specific ratio and that also contains a specific acetic acid ester solvent, and, in this manner, completed the present disclosure.

Specifically, with the aim of advantageously solving the problems set forth above, [1] a presently disclosed binder composition for an all-solid-state secondary battery is a binder composition for an all-solid-state secondary battery in which a sulfide inorganic solid electrolyte is used, comprising: a polymer including a (meth)acrylic acid alkyl ester monomer unit; and an acetic acid ester solvent in which a hydrocarbon group having a carbon number of not less than 6 and not more than 9 is bonded to a non-carbonyl oxygen atom, wherein the (meth)acrylic acid alkyl ester monomer unit includes a first (meth)acrylic acid alkyl ester monomer unit in which an alkyl group having a carbon number of not less than 3 and not more than 8 is bonded to a non-carbonyl oxygen atom and a second (meth)acrylic acid alkyl ester monomer unit in which an alkyl group having a carbon number of not less than 1 and not more than 2 is bonded to a non-carbonyl oxygen atom, and a mass ratio of the first (meth)acrylic acid alkyl ester monomer unit relative to the second (meth)acrylic acid alkyl ester monomer unit is not less than 2.1 and not more than 2.5.

A binder composition for an all-solid-state secondary battery such as set forth above can impart excellent dispersibility and preservation stability to a slurry composition for an all-solid-state secondary battery in which a sulfide inorganic solid electrolyte is used as a solid electrolyte and can also cause a solid electrolyte-containing layer formed using the slurry composition for an all-solid-state secondary battery to display excellent ion conductivity.

In the present specification, "(meth)acryl" indicates "acryl and/or methacryl".

The phrase "includes a monomer unit" as used in the present specification means that "a polymer obtained using that monomer includes a structural unit derived from the monomer".

[2] In the binder composition for an all-solid-state secondary battery according to the foregoing [1], the polymer preferably further includes a vinyl cyanide monomer unit.

When the polymer further includes a vinyl cyanide monomer unit, even better dispersibility and preservation stability can be imparted to a slurry composition for an all-solid-state secondary battery in which a sulfide inorganic solid electrolyte is used as a solid electrolyte, and a solid electrolyte-containing layer formed using the slurry composition for an all-solid-state secondary battery can be caused to display even better ion conductivity.

[3] In the binder composition for an all-solid-state secondary battery according to the foregoing [2], proportional content of the vinyl cyanide monomer unit when all repeating units forming the polymer are taken to be 100 mass% is preferably not less than 3 mass% and less than 7 mass%.

When the proportional content of the vinyl cyanide monomer unit is not less than the lower limit set forth above, dispersibility and preservation stability of a slurry composition for an all-solid-state secondary battery and ion conductivity of a solid electrolyte-containing layer can be improved. Moreover, dispersibility and preservation stability of a slurry composition for an all-solid-state secondary battery and ion conductivity of a solid electrolyte-containing layer can be improved even when the proportional content of the vinyl cyanide monomer unit is less than the upper limit set forth above.

The proportional content (mass%) of a monomer unit in a polymer in the present specification can be measured by a nuclear magnetic resonance (NMR) method such as ¹H-NMR.

[4] In the binder composition for an all-solid-state secondary battery according to any one of the foregoing [1] to [3], the polymer preferably has a weight-average molecular weight of not less than 800,000 and not more than 1,500,000.

When the weight-average molecular weight of the polymer is not less than the lower limit set forth above, preservation stability of a slurry composition for an all-solid-state secondary battery can be improved.

On the other hand, when the weight-average molecular weight of the polymer is not more than the upper limit set forth above, dispersibility of a slurry composition for an all-solid-state secondary battery can be improved.

The "weight-average molecular weight" referred to in the present specification can be measured by a method described in the EXAMPLES section of the present specification.

[5] In the binder composition for an all-solid-state secondary battery according to any one of the foregoing [1] to [4], it is preferable that the polymer further includes an aromatic monomer unit, and proportional content of the aromatic monomer unit when all repeating units forming the polymer are taken to be 100 mass% is not less than 10 mass% and not more than 30 mass%.

When the polymer further includes an aromatic monomer unit, strength of the polymer can be ensured, and excellent form stability can be imparted to a solid electrolyte-containing layer.

Moreover, when the proportional content of the aromatic monomer unit is not less than the lower limit set forth above, strength of the polymer can be increased, and form stability of a solid electrolyte-containing layer can be improved.

On the other hand, when the proportional content of the aromatic monomer unit is not more than the upper limit set forth above, flexibility of the polymer can be increased, and adhesiveness of a solid electrolyte-containing layer can be improved.

[6] In the binder composition for an all-solid-state secondary battery according to any one of the foregoing [1] to [5], total proportional content of the first (meth)acrylic acid alkyl ester monomer unit and the second (meth)acrylic acid alkyl ester monomer unit when all repeating units forming the polymer are taken to be 100 mass% is preferably not less than 50 mass% and not more than 85 mass%.

When the total proportional content of the first (meth)acrylic acid alkyl ester monomer unit and the second (meth)acrylic acid alkyl ester monomer unit is not less than the lower limit set forth above, preservation stability of a slurry composition for an all-solid-state secondary battery can be improved.

On the other hand, when the total proportional content of the first (meth)acrylic acid alkyl ester monomer unit and the second (meth)acrylic acid alkyl ester monomer unit is not more than the upper limit set forth above, reduction of ion conductivity of a solid electrolyte-containing layer can be suppressed.

Moreover, with the aim of advantageously solving the problems set forth above, [7] a presently disclosed slurry composition for an all-solid-state secondary battery comprises: the binder composition for an all-solid-state secondary battery according to any one of the foregoing [1] to [6]; and a sulfide inorganic solid electrolyte.

A slurry composition for an all-solid-state secondary battery such as set forth above has excellent dispersibility and preservation stability and can also form a solid electrolyte-containing layer having excellent ion conductivity.

Furthermore, with the aim of advantageously solving the problems set forth above, [8] a presently disclosed solid electrolyte-containing layer is formed using the slurry composition for an all-solid-state secondary battery according to the foregoing [7].

A solid electrolyte-containing layer such as set forth above has excellent ion conductivity.

Also, with the aim of advantageously solving the problems set forth above, [9] a presently disclosed all-solid-state secondary battery comprises the solid electrolyte-containing layer according to the foregoing [8].

An all-solid-state secondary battery such as set forth above has excellent battery performance such as output characteristics.

### (Advantageous Effect)

According to the present disclosure, it is possible to provide a binder composition for an all-solid-state secondary battery that can impart excellent dispersibility and preservation stability to a slurry composition for an all-solid-state secondary battery in which a sulfide inorganic solid electrolyte is used as a solid electrolyte and that can also cause a solid electrolyte-containing layer formed using the slurry composition for an all-solid-state secondary battery to display excellent ion conductivity.

Moreover, according to the present disclosure, it is possible to provide a slurry composition for an all-solid-state secondary battery that has excellent dispersibility and preservation stability and that can also form a solid electrolyte-containing layer having excellent ion conductivity.

Furthermore, according to the present disclosure, it is possible to provide a solid electrolyte-containing layer that has excellent ion conductivity and an all-solid-state secondary battery that includes the solid electrolyte-containing layer.

### DETAILED DESCRIPTION

The following provides a detailed description of embodiments of the present disclosure.

The presently disclosed binder composition for an all-solid-state secondary battery (hereinafter, also referred to simply as a "binder composition") can be used in production of a slurry composition for an all-solid-state secondary battery (hereinafter, also referred to simply as a "slurry composition") in which a sulfide inorganic solid electrolyte is used as a solid electrolyte. The presently disclosed slurry composition for an all-solid-state secondary battery can be used in formation of a solid electrolyte-containing layer such as an electrode mixed material layer (positive electrode mixed material layer or negative electrode mixed material layer) or a solid electrolyte layer that is used in an all-solid-state secondary battery such as an all-solid-state lithium ion secondary battery. Moreover, the presently disclosed solid electrolyte-containing layer is formed using the presently disclosed slurry composition for an all-solid-state secondary battery. Furthermore, the presently disclosed all-solid-state secondary battery includes the presently disclosed solid electrolyte-containing layer.

### (Binder composition for all-solid-state secondary battery)

The presently disclosed binder composition for an all-solid-state secondary battery contains a polymer including a (meth)acrylic acid alkyl ester monomer unit (hereinafter, also referred to simply as a "polymer") and an acetic acid ester solvent in which a hydrocarbon group having a carbon number of not less than 6 and not more than 9 is bonded to a non-carbonyl oxygen atom (hereinafter, also referred to simply as an "acetic acid ester solvent"), and can optionally further contain other components. Moreover, in the presently disclosed binder composition, the (meth)acrylic acid alkyl ester monomer unit includes a first (meth)acrylic acid alkyl ester monomer unit in which an alkyl group having a carbon number of not less than 3 and not more than 8 is bonded to a non-carbonyl oxygen atom and a second (meth)acrylic acid alkyl ester monomer unit in which an alkyl group having a carbon number of not less than 1 and not more than 2 is bonded to a non-carbonyl oxygen atom, and a mass ratio of the first (meth)acrylic acid alkyl ester monomer unit relative to the second (meth)acrylic acid alkyl ester monomer unit is not less than 2.1 and not more than 2.5. Note that the presently disclosed binder composition does not normally contain a solid electrolyte such as a sulfide inorganic solid electrolyte or an electrode active material.

A binder composition such as set forth above can impart excellent dispersibility and preservation stability to a slurry composition in which a sulfide inorganic solid electrolyte is used as a solid electrolyte. The reason for these effects is presumed to be that interactions arise between the polymer (particularly alkyl groups of the first (meth)acrylic acid alkyl ester monomer unit and the second (meth)acrylic acid alkyl ester monomer unit), the acetic acid ester solvent, and the surface of the sulfide inorganic solid electrolyte.

Moreover, a binder composition such as set forth above can cause a solid electrolyte-containing layer that has been formed using a slurry composition containing the binder composition to display excellent ion conductivity. The reason for this effect is presumed to be that as a result of the polymer including the first (meth)acrylic acid alkyl ester monomer unit and the second (meth)acrylic acid alkyl ester monomer unit in a mass ratio (first (meth)acrylic acid alkyl ester monomer unit/second (meth)acrylic acid alkyl ester monomer unit) of not less than 2.1 and not more than 2.5, the polymer dissolves in the acetic acid ester solvent to a suitable degree, and there is a good balance between a portion of the surface of a sulfide inorganic solid electrolyte that is covered by the polymer and a portion of the surface of the sulfide inorganic solid electrolyte that is exposed in a formed solid electrolyte-containing layer, thereby resulting in binding performance of the polymer being maintained while conductivity of the surface of the sulfide inorganic solid electrolyte is also maintained well.

### <Polymer>

The polymer is a component that can bind components such as a sulfide inorganic solid electrolyte to one another in a solid electrolyte-containing layer that is formed from a slurry composition containing the binder composition and includes a specific (meth)acrylic acid alkyl ester monomer unit that is described below. Note that the polymer may optionally include a vinyl cyanide monomer unit, an aromatic monomer unit, and other repeating units besides the (meth)acrylic acid alkyl ester monomer unit.

### [(Meth)acrylic acid alkyl ester monomer unit]

The (meth)acrylic acid alkyl ester monomer unit includes a first (meth)acrylic acid alkyl ester monomer unit in which an alkyl group having a carbon number of not less than 3 and not more than 8 is bonded to a non-carbonyl oxygen atom and a second (meth)acrylic acid alkyl ester monomer unit in which an alkyl group having a carbon number of not less than 1 and not more than 2 is bonded to a non-carbonyl oxygen atom, and may optionally include (meth)acrylic acid alkyl ester monomer units other than the first (meth)acrylic acid alkyl ester monomer unit and the second (meth)acrylic acid alkyl ester monomer unit (hereinafter, also referred to as "other (meth)acrylic acid alkyl ester monomer units"). Examples of other (meth)acrylic acid alkyl ester monomer units include a (meth)acrylic acid alkyl ester monomer unit in which an alkyl group having a carbon number of 9 or more is bonded to a non-carbonyl oxygen atom.

The alkyl group having a carbon number of not less than 3 and not more than 8 that is bonded to the non-carbonyl oxygen atom in the first (meth)acrylic acid alkyl ester monomer unit may be a chain alkyl group such as an n-butyl group or a 2-ethylhexyl group or may be a cyclic alkyl group such as a cyclohexyl group, but is preferably a chain alkyl group in terms that dispersibility and preservation stability of a slurry composition and ion conductivity of a solid electrolyte-containing layer can be improved.

Note that in the present specification, the term "chain alkyl group" refers to an alkyl group that does not include a cyclic structure, whereas the term "cyclic alkyl group" refers to an alkyl group that includes a cyclic structure as at least part thereof.

Examples of first (meth)acrylic acid alkyl ester monomers that can form the first (meth)acrylic acid alkyl ester monomer unit include acrylic acid alkyl ester monomers in which an alkyl group having a carbon number of not less than 3 and not more than 8 is bonded to a non-carbonyl oxygen atom such as n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, and cyclohexyl acrylate; and methacrylic acid alkyl ester monomers in which an alkyl group having a carbon number of not less than 3 and not more than 8 is bonded to a non-carbonyl oxygen atom such as n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, and cyclohexyl methacrylate. One of these first (meth)acrylic acid alkyl ester monomers may be used individually, or two or more of these first (meth)acrylic acid alkyl ester monomers may be used in combination.

Of these first (meth)acrylic acid alkyl ester monomers, n-butyl acrylate, 2-ethylhexyl acrylate, n-butyl methacrylate, and 2-ethylhexyl methacrylate are preferable, and n-butyl acrylate and 2-ethylhexyl acrylate are more preferable. In other words, the first (meth)acrylic acid alkyl ester monomer unit is preferably one or more monomer units selected from the group consisting of an n-butyl acrylate unit, a 2-ethylhexyl acrylate unit, an n-butyl methacrylate unit, and a 2-ethylhexyl methacrylate unit, and is more preferably either or both of an n-butyl acrylate unit and a 2-ethylhexyl acrylate unit.

Examples of second (meth)acrylic acid alkyl ester monomers that can form the second (meth)acrylic acid alkyl ester monomer unit include methyl acrylate, ethyl acrylate, methyl methacrylate, and ethyl methacrylate. One of these second (meth)acrylic acid alkyl ester monomers may be used individually, or two or more of these second (meth)acrylic acid alkyl ester monomers may be used in combination.

Of these second (meth)acrylic acid alkyl ester monomers, methyl acrylate and ethyl acrylate are preferable, and ethyl acrylate is more preferable. In other words, the second (meth)acrylic acid alkyl ester monomer unit is preferably either or both of a methyl acrylate unit and an ethyl acrylate unit, and is more preferably an ethyl acrylate unit.

A mass ratio of the first (meth)acrylic acid alkyl ester monomer unit relative to the second (meth)acrylic acid alkyl ester monomer unit (first (meth)acrylic acid alkyl ester monomer unit/second (meth)acrylic acid alkyl ester monomer unit) in the presently disclosed binder composition is not less than 2.1 and not more than 2.5.

Moreover, the mass ratio of the first (meth)acrylic acid alkyl ester monomer unit relative to the second (meth)acrylic acid alkyl ester monomer unit is preferably 2.2 or more, and is preferably 2.4 or less.

When the mass ratio of the first (meth)acrylic acid alkyl ester monomer unit relative to the second (meth)acrylic acid alkyl ester monomer unit is 2.2 or more, this effectively lowers the solubility of the polymer in the acetic acid ester solvent and effectively reduces the proportion constituted by a portion of the surface of a sulfide inorganic solid electrolyte that is covered by the polymer (i.e., effectively increases the proportion constituted by a portion of the surface of the sulfide inorganic solid electrolyte that is exposed) in a formed solid electrolyte-containing layer, and, as a result, can improve ion conductivity of the solid electrolyte-containing layer.

On the other hand, when the mass ratio of the first (meth)acrylic acid alkyl ester monomer unit relative to the second (meth)acrylic acid alkyl ester monomer unit is 2.4 or less, this effectively increases the solubility of the polymer in the acetic acid ester solvent, and, as a result, can improve preservation stability of a slurry composition.

The total proportional content of the first (meth)acrylic acid alkyl ester monomer unit and the second (meth)acrylic acid alkyl ester monomer unit when all repeating units (total of monomer units and structural units; same applies below) forming the polymer are taken to be 100 mass% is preferably 50 mass% or more, more preferably 55 mass% or more, and even more preferably 60 mass% or more, and is preferably 85 mass% or less, more preferably 82.5 mass% or less, and even more preferably 80 mass% or less.

When the total proportional content of the first (meth)acrylic acid alkyl ester monomer unit and the second (meth)acrylic acid alkyl ester monomer unit is not less than any of the lower limits set forth above, this effectively increases the solubility of the polymer in the acetic acid ester solvent, and, as a result, can improve preservation stability of a slurry composition.

On the other hand, when the total proportional content of the first (meth)acrylic acid alkyl ester monomer unit and the second (meth)acrylic acid alkyl ester monomer unit is not more than any of the upper limits set forth above, this effectively lowers the solubility of the polymer in the acetic acid ester solvent and effectively reduces the proportion constituted by a portion of the surface of a sulfide inorganic solid electrolyte that is covered by the polymer (i.e., effectively increases the proportion constituted by a portion of the surface of the sulfide inorganic solid electrolyte that is exposed) in a formed solid electrolyte-containing layer, and, as a result, can improve ion conductivity of the solid electrolyte-containing layer.

The proportional content of the first (meth)acrylic acid alkyl ester monomer unit when all repeating units forming the polymer are taken to be 100 mass% is preferably 40 mass% or more, more preferably 42.5 mass% or more, and even more preferably 45 mass% or more, and is preferably 58 mass% or less, more preferably 56.5 mass% or less, and even more preferably 55 mass% or less.

When the proportional content of the first (meth)acrylic acid alkyl ester monomer unit is not less than any of the lower limits set forth above, this effectively lowers the solubility of the polymer in the acetic acid ester solvent and effectively reduces the proportion constituted by a portion of the surface of a sulfide inorganic solid electrolyte that is covered by the polymer (i.e., effectively increases the proportion constituted by a portion of the surface of the sulfide inorganic solid electrolyte that is exposed) in a formed solid electrolyte-containing layer, and, as a result, can improve ion conductivity of the solid electrolyte-containing layer.

On the other hand, when the proportional content of the first (meth)acrylic acid alkyl ester monomer unit is not more than any of the upper limits set forth above, this relatively increases the proportional content of the second (meth)acrylic acid alkyl ester monomer unit and effectively increases the solubility of the polymer in the acetic acid ester solvent, and, as a result, can improve preservation stability of a slurry composition.

The proportional content of the second (meth)acrylic acid alkyl ester monomer unit when all repeating units forming the polymer are taken to be 100 mass% is preferably 10 mass% or more, more preferably 12.5 mass% or more, and even more preferably 15 mass% or more, and is preferably 27 mass% or less, more preferably 26 mass% or less, and even more preferably 25 mass% or less.

When the proportional content of the second (meth)acrylic acid alkyl ester monomer unit is not less than any of the lower limits set forth above, this effectively increases the solubility of the polymer in the acetic acid ester solvent, and, as a result, can improve preservation stability of a slurry composition.

On the other hand, when the proportional content of the second (meth)acrylic acid alkyl ester monomer unit is not more than any of the upper limits set forth above, this relatively increases the proportional content of the first (meth)acrylic acid alkyl ester monomer unit, effectively lowers the solubility of the polymer in the acetic acid ester solvent, and effectively reduces the proportion constituted by a portion of the surface of a sulfide inorganic solid electrolyte that is covered by the polymer (i.e., effectively increases the proportion constituted by a portion of the surface of the sulfide inorganic solid electrolyte that is exposed) in a formed solid electrolyte-containing layer, and, as a result, can improve ion conductivity of the solid electrolyte-containing layer.

Examples of other (meth)acrylic acid alkyl ester monomers that can form other (meth)acrylic acid alkyl ester monomer units include acrylic acid alkyl ester monomers in which an alkyl group having a carbon number of 9 or more is bonded to a non-carbonyl oxygen atom such as nonyl acrylate, decyl acrylate, lauryl acrylate, n-tetradecyl acrylate, and stearyl acrylate; and methacrylic acid alkyl ester monomers in which an alkyl group having a carbon number of 9 or more is bonded to a non-carbonyl oxygen atom such as nonyl methacrylate, decyl methacrylate, lauryl methacrylate, tridecyl methacrylate, n-tetradecyl methacrylate, and stearyl methacrylate.

One of these other (meth)acrylic acid alkyl ester monomers may be used individually, or two or more of these other (meth)acrylic acid alkyl ester monomers may be used in combination.

The proportional content of other (meth)acrylic acid alkyl ester monomer units when all repeating units forming the polymer are taken to be 100 mass% is preferably 5 mass% or less, more preferably 3 mass% or less, even more preferably 1 mass% or less, and particularly preferably 0 mass% or less (i.e., it is particularly preferable that the polymer does not include other (meth)acrylic acid alkyl ester monomer units).

### [Vinyl cyanide monomer unit]

The polymer preferably further includes a vinyl cyanide monomer unit.

When the polymer further includes a vinyl cyanide monomer unit, even better dispersibility and preservation stability can be imparted to a slurry composition in which a sulfide inorganic solid electrolyte is used as a solid electrolyte, and a solid electrolyte-containing layer formed using the slurry composition can be caused to display even better ion conductivity. The reason for these effects is presumed to be due interaction between the surface of the sulfide inorganic solid electrolyte and a cyano group of the vinyl cyanide monomer unit of the polymer.

Examples of vinyl cyanide monomers that can form the vinyl cyanide monomer unit include acrylonitrile, methacrylonitrile, α-chloroacrylonitrile, and α-ethylacrylonitrile. One of these vinyl cyanide monomers may be used individually, or two or more of these vinyl cyanide monomers may be used in combination.

Of these vinyl cyanide monomers, acrylonitrile and methacrylonitrile are preferable, and acrylonitrile is more preferable. In other words, the vinyl cyanide monomer unit is preferably either or both of an acrylonitrile unit and a methacrylonitrile unit, and is more preferably an acrylonitrile unit.

The proportional content of the vinyl cyanide monomer unit when all repeating units forming the polymer are taken to be 100 mass% is preferably 3 mass% or more, more preferably 3.5 mass% or more, and even more preferably 4 mass% or more, and is preferably less than 7 mass%, more preferably 6.5 mass% or less, and even more preferably 6 mass% or less.

When the proportional content of the vinyl cyanide monomer unit is not less than any of the lower limits set forth above, this causes good dispersion of a solid electrolyte, and, as a result, can improve dispersibility and preservation stability of a slurry composition and ion conductivity of a solid electrolyte-containing layer. Moreover, even when the proportional content of the vinyl cyanide monomer unit is less than any of the upper limits set forth above, the solubility of the polymer in the acetic acid ester solvent is not excessively reduced, dispersing ability of the polymer with respect to a solid electrolyte is ensured, and, as a result, dispersibility and preservation stability of a slurry composition and ion conductivity of a solid electrolyte-containing layer can be improved.

### [Aromatic monomer unit]

The polymer preferably further includes an aromatic monomer unit.

When the polymer further includes an aromatic monomer unit, strength of the polymer can be ensured, and excellent form stability can be imparted to a solid electrolyte-containing layer.

No specific limitations are placed on aromatic monomers that can form the aromatic monomer unit so long as they include an aromatic ring. An aromatic vinyl monomer or a (meth)acrylic acid ester monomer that includes an aromatic hydrocarbon ring may be used as an aromatic monomer.

Note that the term "aromatic vinyl monomer" as used in the present specification is not inclusive of a monomer that corresponds to a (meth)acrylic acid ester monomer including an aromatic hydrocarbon ring (i.e., the term "aromatic vinyl monomer unit" is not inclusive of a (meth)acrylic acid ester monomer unit including an aromatic hydrocarbon ring).

Examples of aromatic vinyl monomers include styrene, styrene sulfonic acid and salts thereof, α-methylstyrene, p-t-butylstyrene, butoxystyrene, vinyltoluene, chlorostyrene, and vinylnaphthalene.

The aromatic hydrocarbon ring that is included in a (meth)acrylic acid ester monomer unit including an aromatic hydrocarbon ring may be a benzene ring, a naphthalene ring, an anthracene ring, or the like, for example, without any specific limitations. Of these aromatic hydrocarbon rings, a benzene ring is preferable. Note that the monomer unit may include one type of aromatic hydrocarbon ring or may include two or more types of aromatic hydrocarbon rings.

Examples of (meth)acrylic acid ester monomers including an aromatic hydrocarbon ring include phenoxyethyl (meth)acrylate, phenyl (meth)acrylate, ethoxylated o-phenylphenol (meth)acrylate, and phenoxypolyethylene glycol (meth)acrylate.

Note that in the present specification, "(meth)acrylate" indicates "acrylate" and/or "methacrylate".

One of the above-described aromatic monomers may be used individually, or two or more of the above-described aromatic monomers may be used in combination. Of these aromatic monomers, styrene and phenoxyethyl acrylate are preferable from a viewpoint of good interactions between the polymer and a sulfide inorganic solid electrolyte and further improving dispersibility and preservation stability of a slurry composition, and styrene is more preferable. In other words, the aromatic monomer unit is preferably either or both of a styrene unit and a phenoxyethyl acrylate unit, and is more preferably a styrene unit.

The proportional content of the aromatic monomer unit when all repeating units forming the polymer are taken to be 100 mass% is preferably 10 mass% or more, more preferably 12.5 mass% or more, and even more preferably 15 mass% or more, and is preferably 30 mass% or less, more preferably 27.5 mass% or less, and even more preferably 25 mass% or less.

When the proportional content of the aromatic monomer unit is not less than any of the lower limits set forth above, strength of the polymer can be increased, and form stability of a solid electrolyte-containing layer can be improved.

On the other hand, when the proportional content of the aromatic monomer unit is not more than any of the upper limits set forth above, flexibility of the polymer can be increased, and adhesiveness of a solid electrolyte-containing layer can be improved.

### [Other repeating units]

The term "other repeating units" as used in the present specification refers to monomer units other than the (meth)acrylic acid alkyl ester monomer unit, the vinyl cyanide monomer unit, and the aromatic monomer unit described above.

Examples of other repeating units include an aliphatic conjugated diene monomer unit, an alkylene structural unit, and a (meth)acrylic acid ester monomer unit (excluding the (meth)acrylic acid alkyl ester monomer unit and (meth)acrylic acid ester monomer unit including an aromatic hydrocarbon ring that were described above).

Examples of aliphatic conjugated diene monomers that can form the aliphatic conjugated diene monomer unit include 1,3-butadiene, isoprene, 2,3-dimethyl-1,3-butadiene, and 1,3-pentadiene.

The alkylene structural unit is a repeating unit composed only of an alkylene structure represented by a general formula -CₙH₂ₙ- (n is an integer of 2 or more). Although the alkylene structural unit may be linear or branched, it is preferable that the alkylene structural unit is linear (i.e., is a linear alkylene structural unit). The method by which the alkylene structural unit is introduced into the polymer is not specifically limited and may be either of the following methods (1) or (2), for example.
(1) A method in which a monomer composition containing an aliphatic conjugated diene monomer is polymerized and then the resultant polymerized product is hydrogenated so as to convert an aliphatic conjugated diene monomer unit to an alkylene structural unit
(2) A method in which a monomer composition containing a 1-olefin monomer is polymerized to produce a polymer

Note that the aliphatic conjugated diene monomer used in method (1) may be any of the aliphatic conjugated diene monomers listed above as aliphatic conjugated diene monomers that can form the aliphatic conjugated diene monomer unit. Selective hydrogenation of the aliphatic conjugated diene monomer unit can be carried out by a commonly known method such as an oil-layer hydrogenation method or a water-layer hydrogenation method.

Moreover, the 1-olefin monomer in method (2) may be ethylene, propylene, 1-butene, 1-hexene, or the like, for example.

One of these aliphatic conjugated diene monomers or 1-olefin monomers may be used individually, or two or more of these aliphatic conjugated diene monomers or 1-olefin monomers may be used in combination.

Examples of (meth)acrylic acid ester monomers (excluding the (meth)acrylic acid alkyl ester monomers and (meth)acrylic acid ester monomers including an aromatic hydrocarbon ring that were described above) that can form the (meth)acrylic acid ester monomer unit include acrylic acid alkoxy esters such as 2-methoxyethyl acrylate and 2-ethoxyethyl acrylate; 2-(perfluoroalkyl)ethyl acrylates such as 2-(perfluorobutyl)ethyl acrylate and 2-(perfluoropentyl)ethyl acrylate; methacrylic acid alkoxy esters such as 2-methoxyethyl methacrylate and 2-ethoxyethyl methacrylate; and 2-(perfluoroalkyl)ethyl methacrylates such as 2-(perfluorobutyl)ethyl methacrylate and 2-(perfluoropentyl)ethyl methacrylate.

The proportional content of other repeating units when all repeating units forming the polymer are taken to be 100 mass% is preferably 5 mass% or less, more preferably 3 mass% or less, even more preferably 1 mass% or less, and particularly preferably 0 mass% or less (i.e., it is particularly preferable that the polymer does not include other repeating units).

### [Weight-average molecular weight of polymer]

The weight-average molecular weight of the polymer is preferably 800,000 or more, more preferably 850,000 or more, and even more preferably 900,000 or more, and is preferably 1,500,000 or less, more preferably 1,400,000 or less, and even more preferably 1,300,000 or less.

When the weight-average molecular weight of the polymer is not less than any of the lower limits set forth above, preservation stability of a slurry composition can be improved.

On the other hand, when the weight-average molecular weight of the polymer is not more than any of the upper limits set forth above, dispersibility of a slurry composition can be improved.

### [Production method of polymer]

Although no specific limitations are placed on the method by which the polymer is produced, the polymer can be produced through polymerization of a monomer composition containing the above-described monomers. Moreover, after polymerization of the monomer composition, the resultant polymerized product may optionally be hydrogenated.

A method such as solution polymerization, suspension polymerization, bulk polymerization, or emulsion polymerization can be adopted as the polymerization method without any specific limitations. In each of these polymerization methods, a known emulsifier (for example, sodium lauryl sulfate) and a known polymerization initiator (for example, ammonium persulfate) can be used as necessary. Moreover, a reaction such as ionic polymerization, radical polymerization, or living radical polymerization can be adopted as the polymerization reaction.

The method of hydrogenation is not specifically limited and can be a typical method using a catalyst (for example, refer to WO2012/165120A1, WO2013/080989A1, and JP2013-8485A).

### [Proportional content of polymer]

The proportional content of the polymer in the binder composition is preferably 2 mass% or more, and more preferably 5 mass% or more relative to all components (inclusive of solvent) in the binder composition, and is preferably 20 mass% or less, and more preferably 15 mass% or less relative to all components in the binder composition.

### <Acetic acid ester solvent>

The hydrocarbon group having a carbon number of not less than 6 and not more than 9 that is bonded to the non-carbonyl oxygen atom in the acetic acid ester solvent may be an aliphatic hydrocarbon group such as an alkyl group, an alkenyl group, or an alkynyl group; an aromatic hydrocarbon group such as an aryl group; or the like, for example. Of these hydrocarbon groups, an aliphatic hydrocarbon group is preferable, and an alkyl group is more preferable.

Although the following describes an acetic acid ester solvent having an alkyl group as the hydrocarbon group having a carbon number of not less than 6 and not more than 9 that is bonded to the non-carbonyl oxygen atom, the acetic acid ester solvent that is used in the presently disclosed binder composition is not limited to that described below.

The acetic acid ester solvent having an alkyl group as the hydrocarbon group having a carbon number of not less than 6 and not more than 9 that is bonded to the non-carbonyl oxygen atom may be an acetic acid ester solvent in which a linear alkyl group is bonded such as n-hexyl acetate (carbon number: 6), n-heptyl acetate (carbon number: 7), n-octyl acetate (carbon number: 8), or n-nonyl acetate (carbon number: 9); an acetic acid ester solvent in which a branched alkyl group is bonded such as 2-ethylbutyl acetate (carbon number: 6), 3-methylpentyl acetate (carbon number: 6), or 2-ethylhexyl acetate (carbon number: 8); an acetic acid ester solvent in which a cyclic alkyl group is bonded such as cyclohexyl acetate (carbon number: 6) or methylcyclohexyl acetate (carbon number: 7); or the like, for example. Note that the carbon number in parentheses indicates the carbon number of the alkyl group that is bonded to the non-carbonyl oxygen atom.

One of these acetic acid ester solvents may be used individually, or two or more of these acetic acid ester solvents may be used in combination. Of these acetic acid ester solvents, acetic acid ester solvents in which a linear alkyl group is bonded and acetic acid ester solvents in which a branched alkyl group is bonded are preferable in terms that dispersibility and preservation stability of a slurry composition and ion conductivity of a solid electrolyte-containing layer can be improved. Moreover, acetic acid ester solvents in which a linear alkyl group is bonded are more preferable in terms that dispersibility and preservation stability of a slurry composition can be further improved, and n-heptyl acetate and n-octyl acetate are even more preferable.

Note that the term "linear alkyl group" as used in the present specification refers to those among the previously described "chain alkyl groups" that are linear and are not branched. Moreover, the term "branched alkyl group" refers to those among the previously described "chain alkyl groups" that are branched. The term "cyclic alkyl group" refers to an alkyl group having a cyclic structure as at least part thereof as previously described.

### <Other components>

No specific limitations are placed on other components that can optionally be contained in the binder composition so long as the objects of the present disclosure are not lost as a result and examples of such other components include binders other than the previously described polymer, solvents other than the previously described acetic acid ester solvent, dispersants, leveling agents, defoamers, and reinforcing materials.

Note that it is preferable that the presently disclosed binder composition does not contain a binder other than the previously described polymer and a solvent other than the previously described acetic acid ester solvent from a viewpoint that dispersibility and preservation stability of a slurry composition and ion conductivity of a solid electrolyte-containing layer can be improved.

### <Production method of binder composition>

The method by which the presently disclosed binder composition is produced is not specifically limited and may be a method in which the previously described polymer and other optional components are mixed in the acetic acid ester solvent.

### (Slurry composition for all-solid-state secondary battery)

The presently disclosed slurry composition for an all-solid-state secondary battery contains at least the presently disclosed binder composition set forth above and a sulfide inorganic solid electrolyte. In more detail, the presently disclosed slurry composition contains the previously described polymer, the previously described acetic acid ester solvent, and a sulfide inorganic solid electrolyte, and can optionally further contain one or more selected from the group consisting of an electrode active material (positive electrode active material or negative electrode active material), a conductive material, and other components. The acetic acid ester solvent that is contained in the slurry composition may all originate from the binder composition or may include an acetic acid ester solvent that was newly added to the slurry composition, separately to the acetic acid ester solvent originating from the binder composition. Moreover, other components that can be contained in the slurry composition may all originate from the binder composition or may include other components that were newly added to the slurry composition, separately to other components originating from the binder composition.

Furthermore, the presently disclosed slurry composition has excellent dispersibility and preservation stability and can also form a solid electrolyte-containing layer having excellent ion conductivity as a result of containing the presently disclosed binder composition.

Note that a slurry composition for an all-solid-state secondary battery that contains at least the previously described polymer, the previously described acetic acid ester solvent, a sulfide inorganic solid electrolyte, and a positive electrode active material may also be referred to as a slurry composition for an all-solid-state secondary battery positive electrode in the present specification.

Moreover, a slurry composition for an all-solid-state secondary battery that contains at least the previously described polymer, the previously described acetic acid ester solvent, a sulfide inorganic solid electrolyte, and a negative electrode active material may also be referred to as a slurry composition for an all-solid-state secondary battery negative electrode in the present specification.

Furthermore, a slurry composition for an all-solid-state secondary battery that contains at least the previously described polymer, the previously described acetic acid ester solvent, and a sulfide inorganic solid electrolyte and that does not contain an electrode active material may also be referred to as a slurry composition for an all-solid-state secondary battery electrolyte layer in the present specification.

### <Polymer>

The polymer that is contained in the presently disclosed slurry composition may be the same as the polymer that was previously described in the "Polymer" section of the "Binder composition for all-solid-state secondary battery" section.

The amount of the polymer that is contained in the presently disclosed slurry composition is not specifically limited but is preferably 0.1 parts by mass or more, more preferably 0.5 parts by mass or more, and even more preferably 1 part by mass or more per 100 parts by mass of the sulfide inorganic solid electrolyte, and is preferably 10 parts by mass or less, more preferably 8 parts by mass or less, and even more preferably 4 parts by mass or less per 100 parts by mass of the sulfide inorganic solid electrolyte.

When the content of the polymer in the slurry composition is 0.1 parts by mass or more per 100 parts by mass of the sulfide inorganic solid electrolyte, the polymer can sufficiently display its function as a binder while also causing good dispersion of the sulfide inorganic solid electrolyte. Consequently, dispersibility and preservation stability of the slurry composition can be further increased, and ion conductivity of a solid electrolyte-containing layer can be even further improved.

On the other hand, when the content of the polymer in the slurry composition is 10 parts by mass or less per 100 parts by mass of the solid electrolyte, ion conductivity of a solid electrolyte-containing layer can be sufficiently ensured.

### <Acetic acid ester solvent>

The acetic acid ester solvent that is contained in the presently disclosed slurry composition may be the same as the acetic acid ester solvent that was previously described in the "Acetic acid ester solvent" section of the "Binder composition for all-solid-state secondary battery" section.

### <Sulfide inorganic solid electrolyte>

No specific limitations are placed on the sulfide inorganic solid electrolyte so long as it is particles formed of an inorganic solid material that includes a sulfur atom and displays ion conductivity.

Note that although the presently disclosed slurry composition may contain a solid electrolyte other than the sulfide inorganic solid electrolyte (for example, an oxide inorganic solid electrolyte) to the extent that the objects of the present disclosure are not lost, it is preferable that the presently disclosed slurry composition only contains a sulfide inorganic solid electrolyte as a solid electrolyte in terms of improving dispersibility and preservation stability and also enabling improvement of ion conductivity of a solid electrolyte-containing layer.

A crystalline inorganic ion conductor, an amorphous inorganic ion conductor, or a mixture thereof can be used as the sulfide inorganic solid electrolyte without any specific limitations so long as it is particles such as described above.

For example, in a case in which the all-solid-state secondary battery is an all-solid-state lithium ion secondary battery, a crystalline inorganic lithium ion conductor, an amorphous inorganic lithium ion conductor, or a mixture thereof can normally be used as the sulfide inorganic solid electrolyte.

Although the following describes, as one example, a case in which the slurry composition for an all-solid-state secondary battery is a slurry composition for an all-solid-state lithium ion secondary battery, the presently disclosed slurry composition for an all-solid-state secondary battery is not limited to the following example.

The crystalline inorganic lithium ion conductor may be Thio-LISICON (Li_{3.25}Ge_{0.25}P_{0.75}S₄), an argyrodite-type lithium ion conductor (for example, Li_{5.6}PS_{4.4}Cl_{1.8}), or the like.

The amorphous inorganic lithium ion conductor may, for example, be glass Li-Si-S-O, Li-P-S, or an amorphous inorganic lithium ion conductor obtained using a raw material composition containing Li₂S and a sulfide of an element belonging to any one of groups 13 to 15 of the periodic table.

The element belonging to any one of groups 13 to 15 may be Al, Si, Ge, P, As, Sb, or the like, for example. Moreover, the sulfide of the element belonging to any one of groups 13 to 15 may, more specifically, be Al₂S₃, SiS₂, GeS₂, P₂S₃, P₂S₅, As₂S₃, Sb₂S₃, or the like. The method by which the amorphous inorganic lithium ion conductor is synthesized using the raw material composition may be an amorphization method such as mechanical milling or melt quenching, for example. The amorphous inorganic lithium ion conductor that is obtained using the raw material composition containing Li₂S and the sulfide of the element belonging to any one of groups 13 to 15 of the periodic table is preferably Li₂S-P₂S₅, Li₂S-SiS₂, Li₂S-GeS₂, or Li₂S-Al₂S₃, and more preferably Li₂S-P₂S₅.

The amorphous inorganic lithium ion conductors described above can be used individually or as a mixture of two or more types.

Of the examples described above, an amorphous sulfide containing Li and P is preferable as a sulfide inorganic solid electrolyte for an all-solid-state lithium ion secondary battery from a viewpoint of forming a solid electrolyte-containing layer having excellent ion conductivity. An amorphous sulfide containing Li and P has high lithium ion conductivity, and thus can reduce internal resistance of a battery and improve output characteristics when used as a sulfide inorganic solid electrolyte.

The amorphous sulfide containing Li and P is more preferably sulfide glass formed of Li₂S and P₂S₅ from a viewpoint of reducing internal resistance and improving output characteristics of a battery, and is particularly preferably sulfide glass produced from a mixed raw material of Li₂S and P₂S₅ in which the molar ratio of Li₂S:P₂S₅ is 65:35 to 85:15. Moreover, the amorphous sulfide containing Li and P is preferably sulfide glass-ceramic that is obtained by reacting a mixed raw material of Li₂S and P₂S₅ in which the molar ratio of Li₂S:P₂S₅ is 65:35 to 85:15 by a mechanochemical method. The molar ratio of Li₂S:P₂S₅ in the mixed raw material is preferably 68:32 to 80:20 from a viewpoint of maintaining a state of high lithium ion conductivity.

Note that the sulfide inorganic solid electrolyte may contain one or more sulfides selected from the group consisting of Al₂S₃, B₂S₃, and SiS₂ as a starting material other than Li₂S and P₂S₅ to the extent that ion conductivity is not reduced. The addition of such a sulfide can stabilize a glass component in the sulfide inorganic solid electrolyte.

In the same manner, the sulfide inorganic solid electrolyte may contain one or more ortho-oxoacid lithium salts selected from the group consisting of Li₃PO₄, Li₄SiO₄, Li₄GeO₄, Li₃BO₃, and Li₃AlO₃, in addition to Li₂S and P₂S₅. The inclusion of such an ortho-oxoacid lithium salt can stabilize a glass component in the sulfide inorganic solid electrolyte.

In the presently disclosed slurry composition, the sulfide inorganic solid electrolyte may be present as a plurality of particles (sulfide inorganic solid electrolyte particles) or may be present as an aggregate formed through aggregation of at least some of the plurality of sulfide inorganic solid electrolyte particles. This aggregate is an aggregate that contains at least the sulfide inorganic solid electrolyte and that can optionally contain the previously described polymer as a binder, etc.

The average primary particle diameter of the sulfide inorganic solid electrolyte (i.e., the average particle diameter when the sulfide inorganic solid electrolyte particles are present individually) is preferably 0.1 µm or more, more preferably 0.2 µm or more, even more preferably 0.5 µm or more, and particularly preferably 1 µm or more, and is preferably 10 µm or less, more preferably 7 µm or less, even more preferably 5 µm or less, and particularly preferably 3 µm or less.

When the average primary particle diameter of the sulfide inorganic solid electrolyte is 0.1 µm or more, dispersibility and preservation stability of the slurry composition can be further increased, and ion conductivity of a solid electrolyte-containing layer can be even further improved.

On the other hand, when the average primary particle diameter of the sulfide inorganic solid electrolyte is 10 µm or less, ion conductivity of a solid electrolyte-containing layer can be further improved.

The average primary particle diameter of the sulfide inorganic solid electrolyte referred to in the present specification can be determined by observing 100 sulfide inorganic solid electrolyte particles using an electron microscope, measuring the particle diameters of the particles in accordance with JIS Z8827-1:2008, and calculating an arithmetic mean value of these values.

### <Electrode active material>

The electrode active material is a material that gives and receives electrons in an electrode of an all-solid-state secondary battery. In a case in which the all-solid-state secondary battery is an all-solid-state lithium ion secondary battery, for example, a material that can occlude and release lithium is normally used as the electrode active material.

Although the following describes, as one example, a case in which the slurry composition is a slurry composition for an all-solid-state lithium ion secondary battery, the presently disclosed slurry composition is not limited to the following example.

A positive electrode active material for an all-solid-state lithium ion secondary battery may be a positive electrode active material that is formed of an inorganic compound or a positive electrode active material that is formed of an organic compound without any specific limitations. Note that the positive electrode active material may also be a mixture of an inorganic compound and an organic compound.

The positive electrode active material formed of an inorganic compound may be a transition metal oxide, a complex oxide of lithium and a transition metal (lithium-containing complex metal oxide), a transition metal sulfide, or the like, for example. The transition metal may be Fe, Co, Ni, Mn, or the like. Specific examples of inorganic compounds that may be used in the positive electrode active material include lithium-containing complex metal oxides such as LiCoO₂ (lithium cobalt oxide), LiNiO₂, LiMnO₂, LiMn₂O₄, LiFePO₄, and LiFeVO₄; transition metal sulfides such as TiS₂, TiS₃, and amorphous MoS₂; and transition metal oxides such as Cu₂V₂O₃, amorphous V₂O-P₂O₅, MoO₃, V₂O₅, and V₆O₁₃. These compounds may have undergone partial element substitution.

The above-described positive electrode active materials formed of inorganic compounds can be used individually or as a mixture of two or more types.

The positive electrode active material formed of an organic compound may be polyaniline, polypyrrole, a polyacene, a disulfide compound, a polysulfide compound, an N-fluoropyridinium salt, or the like, for example.

The above-described positive electrode active materials formed of organic compounds can be used individually or as a mixture of two or more types.

A negative electrode active material for an all-solid-state lithium ion secondary battery may be an allotrope of carbon such as graphite or coke. A negative electrode active material that is formed of an allotrope of carbon can be used in a mixed or coated form with a metal, metal salt, oxide, or the like. Other examples of negative electrode active materials that can be used include oxides and sulfates of silicon, tin, zinc, manganese, iron, nickel, and the like, metal lithium, lithium alloys such as Li-Al, Li-Bi-Cd, and Li-Sn-Cd, lithium transition metal nitrides, and silicone.

The above-described negative electrode active materials can be used individually or as a mixture of two or more types.

### <Conductive material>

The conductive material is a material for ensuring electrical contact among the electrode active material in an electrode mixed material layer formed using the slurry composition. Examples of conductive materials that can be used include conductive carbon materials such as carbon black (for example, acetylene black, Ketjenblack^{®} (Ketjenblack is a registered trademark in Japan, other countries, or both), and furnace black), single-walled and multi-walled carbon nanotubes (multi-walled carbon nanotubes are inclusive of cup-stacked carbon nanotubes), carbon nanohorns, vapor-grown carbon fiber, milled carbon fiber obtained through pyrolysis and subsequent pulverization of polymer fiber, single-layer and multi-layer graphene, and carbon non-woven fabric sheet obtained through pyrolysis of non-woven fabric formed of polymer fiber; and fibers and foils of various metals.

One of these conductive materials can be used individually, or two or more of these conductive materials can be used in combination.

Note that the content of the conductive material in the slurry composition is preferably 0.1 parts by mass or more, and more preferably 0.5 parts by mass or more per 100 parts by mass of the electrode active material, and is preferably 5 parts by mass or less, and more preferably 3 parts by mass or less per 100 parts by mass of the electrode active material. When the amount of the conductive material is within any of the ranges set forth above, electrical contact among the electrode active material can be sufficiently ensured, and an all-solid-state secondary battery can be caused to display excellent battery characteristics (output characteristics, etc.).

### <Other components>

Examples of other components that can be contained in the presently disclosed slurry composition include the same other components as previously described in the "Other components" section of the "Binder composition for all-solid-state secondary battery" section.

### <Solid content concentration of slurry composition>

The solid content concentration of the slurry composition can be set as not less than 30 mass% and less than 70 mass%, for example, but is not specifically limited thereto.

### <Production method of slurry composition>

The presently disclosed slurry composition can be obtained by mixing the above-described components by any mixing method, for example, without any specific limitations.

In one embodiment, the presently disclosed slurry composition can suitably be obtained, for example, by a production method including a step (premixing step) of performing mixing treatment with respect to a composition that contains the sulfide inorganic solid electrolyte and the binder composition (i.e., the sulfide inorganic solid electrolyte, the polymer, and the acetic acid ester solvent) and that has a solid content concentration of 70 mass% or more to produce a premix, a step (first dilution step) of further adding the acetic acid ester solvent to the premix having a solid content concentration of 70 mass% or more to obtain a dilution having a solid content concentration of more than 40 mass% and less than 70 mass%, a step (kneading step) of performing kneading treatment with respect to the dilution having a solid content concentration of more than 40 mass% and less than 70 mass% to produce a kneaded product, and a step (second dilution step) of further adding the acetic acid ester solvent to the kneaded product to dilute the kneaded product.

Note that the above-described production method of the slurry composition may include steps other than the premixing step, the first dilution step, the kneading step, and the second dilution step.

Moreover, in the above-described production method of the slurry composition, an electrode active material, a conductive material, and other components can optionally be used in addition to the sulfide inorganic solid electrolyte, the polymer, and the solvent. Although no specific limitations are made, the electrode active material, the conductive material, and the other components can, for example, be subjected to mixing treatment together with the sulfide inorganic solid electrolyte, the polymer, and the solvent in the premixing step such that the electrode active material, conductive material, and other components are contained in the premix.

Although the following describes the premixing step, the first dilution step, the kneading step, and the second dilution step, the presently disclosed slurry composition is not limited to being a slurry composition that is obtained using a production method including these steps.

### [Premixing step]

In the premixing step, a composition (starting composition) containing at least the sulfide inorganic solid electrolyte and the binder composition (i.e., the sulfide inorganic solid electrolyte, the polymer, and the acetic acid ester solvent) is subjected to mixing treatment in a state in which the solid content concentration is 70 mass% or more to produce a premix having a solid content concentration of 70 mass% or more. By performing mixing treatment with respect to a composition that has a solid content concentration of 70 mass% or more, it is possible to cause good dispersion of the sulfide inorganic solid electrolyte in the obtained slurry composition. Note that the upper limit for the solid content concentration of the starting composition and the premix is not specifically limited, and the upper limit can be set as 90 mass% or less, for example, for each of the starting composition and the premix.

A known device such as a planetary centrifugal mixer can be used without any specific limitations as a mixing device that is used in the mixing treatment in the premixing step.

Moreover, the acetic acid ester solvent may be fed into the mixing device all at once, continuously, or intermittently when obtaining the premix in the premixing step, but is more preferably fed intermittently. Furthermore, in the premixing step, it is preferable that mixing treatment is performed a plurality of times with different mixing subject solid content concentrations due to addition of the acetic acid ester solvent. By changing the solid content concentration of the composition serving as a mixing subject in a stepwise manner from a high solid content concentration state to a low solid content concentration state while performing mixing treatment at each solid content concentration, it is possible to cause good dispersion of the sulfide inorganic solid electrolyte and to further improve dispersibility and preservation stability of the slurry composition and ion conductivity of a solid electrolyte-containing layer.

The number of repetitions of the mixing treatment is not specifically limited but is preferably 2 or more, and more preferably 3 or more. When the number of repetitions of the mixing treatment is 2 or more, this enables even better dispersion of the sulfide inorganic solid electrolyte and can even further improve dispersibility and preservation stability of the slurry composition and ion conductivity of a solid electrolyte-containing layer. On the other hand, although no specific limitations are placed on the upper limit for the number of repetitions of the mixing treatment, the number of repetitions is preferably 8 or less, and more preferably 7 or less from a viewpoint of slurry composition production efficiency.

No specific limitations are placed on conditions of the mixing treatment. For example, the duration of each repetition of the mixing treatment can be set within a range of not less than 10 seconds and not more than 10 minutes.

### [First dilution step]

In the first dilution step, an acetic acid ester solvent is added to the premix that has been obtained in the premixing step to obtain a dilution (first dilution) having a solid content concentration of more than 40 mass% and less than 70 mass%. The acetic acid ester solvent that is added in the first dilution step may be the same as or different from the acetic acid ester solvent that was used in the premixing step, but is preferably the same.

### [Kneading step]

In the kneading step, the first dilution having a solid content concentration of more than 40 mass% and less than 70 mass% that has been obtained in the first dilution step is kneaded to obtain a kneaded product. By performing kneading treatment of the first dilution having a solid content concentration that is within the range set forth above, sufficient shear can be applied to the first dilution serving as a kneading subject. This enables good dispersion of the sulfide inorganic solid electrolyte and can even further improve dispersibility and preservation stability of the slurry composition and ion conductivity of a solid electrolyte-containing layer.

A known device can be used as a kneading device that is used in the kneading treatment of the kneading step without any specific limitations so long as it can apply shear to the first dilution having a solid content concentration that is within the range set forth above. Moreover, the mixing device that was used in the premixing step can, for example, be used in that form as the kneading device.

Furthermore, in the kneading step, it is preferable that kneading treatment is performed a plurality of times with different mixing subject solid content concentrations due to addition of an acetic acid ester solvent. By changing the solid content concentration of the first dilution serving as a kneading subject in a stepwise manner from a high solid content concentration state to a low solid content concentration state while performing mixing treatment at each solid content concentration in this manner, it is possible to cause good dispersion of the sulfide inorganic solid electrolyte and to further improve dispersibility and preservation stability of the slurry composition and ion conductivity of a solid electrolyte-containing layer.

The number of repetitions of the kneading treatment is not specifically limited but is preferably 2 or more, and more preferably 3 or more. When the number of repetitions of the kneading treatment is 2 or more, this enables even better dispersion of the sulfide inorganic solid electrolyte and can even further improve dispersibility and preservation stability of the slurry composition and ion conductivity of a solid electrolyte-containing layer. On the other hand, although no specific limitations are placed on the upper limit for the number of repetitions of the kneading treatment, the number of repetitions is preferably 5 or less, and more preferably 4 or less from a viewpoint of slurry composition production efficiency.

No specific limitations are placed on conditions of the kneading treatment. For example, the duration of each repetition of the kneading treatment can be set within a range of not less than 10 seconds and not more than 10 minutes.

### [Second dilution step]

In the second dilution step, an acetic acid ester solvent is added to the kneaded product that has been obtained in the kneading step. The acetic acid ester solvent that is added in the second dilution step may be the same as or different from the acetic acid ester solvent that was used in the premixing step and the first dilution step, but is preferably the same.

Note that the kneaded product (second dilution) to which the acetic acid ester solvent has been added in the second dilution step may be used in that form as a slurry composition or may be subjected to other steps such as further mixing treatment to obtain a slurry composition.

### (Solid electrolyte-containing layer)

The presently disclosed solid electrolyte-containing layer is a layer that contains a sulfide inorganic solid electrolyte. The solid electrolyte-containing layer may be an electrode mixed material layer (positive electrode mixed material layer or negative electrode mixed material layer) that gives and receives electrons through electrochemical reactions, a solid electrolyte layer that is provided between a positive electrode mixed material layer and a negative electrode mixed material layer that are in opposition to each other, or the like, for example.

Moreover, the presently disclosed solid electrolyte-containing layer is a layer that is formed using the presently disclosed slurry composition set forth above. For example, the presently disclosed solid electrolyte-containing layer can be formed by applying the slurry composition set forth above onto the surface of a suitable substrate to form a coating film and subsequently drying the coating film that has been formed. In other words, the presently disclosed solid electrolyte-containing layer is formed of a dried product of the slurry composition set forth above, normally contains a sulfide inorganic solid electrolyte and a polymer, and can optionally further contain one or more selected from the group consisting of an electrode active material, a conductive material, and other components. Note that components contained in the solid electrolyte-containing layer are components that were contained in the slurry composition set forth above and that the content ratios of these components are normally equal to the content ratios thereof in the slurry composition.

Furthermore, the presently disclosed solid electrolyte-containing layer can display excellent ion conductivity as a result of being formed from the presently disclosed slurry composition.

### <Substrate>

No limitations are placed on the substrate onto which the slurry composition is applied. For example, a coating film of the slurry composition may be formed on the surface of a releasable substrate, the coating film may be dried to form a solid electrolyte-containing layer, and then the releasable substrate may be peeled from the solid electrolyte-containing layer. The solid electrolyte-containing layer that has been peeled from the releasable substrate in this manner can be used as a free-standing film in formation of a battery member (for example, an electrode or a solid electrolyte layer) of an all-solid-state secondary battery.

However, it is preferable to use a current collector or an electrode as the substrate from a viewpoint of increasing battery member production efficiency through omission of a step of peeling the solid electrolyte-containing layer. Specifically, in production of an electrode mixed material layer, it is preferable that the slurry composition is applied onto a current collector serving as a substrate. Moreover, in production of a solid electrolyte layer, it is preferable that the slurry composition is applied onto an electrode (positive electrode or negative electrode).

### [Current collector]

A material having electrical conductivity and electrochemical durability is used as the current collector. Specifically, the current collector may, for example, be made of iron, copper, aluminum, nickel, stainless steel, titanium, tantalum, gold, platinum, or the like. Of these materials, copper foil is particularly preferable as a current collector used for a negative electrode. On the other hand, aluminum foil is particularly preferable as a current collector used for a positive electrode. Note that one of these materials may be used individually, or two or more of these materials may be used in combination in a freely selected ratio.

### [Electrode]

The electrode (positive electrode or negative electrode) is not specifically limited and may be an electrode that is obtained by forming an electrode mixed material layer containing an electrode active material, a solid electrolyte, and a binder for an electrode on a current collector such as described above.

The electrode active material, solid electrolyte, and binder for an electrode that are contained in the electrode mixed material layer of the electrode are not specifically limited, and known examples thereof can be used. The solid electrolyte that is contained in the electrode mixed material layer of the electrode is not specifically limited so long as it is particles formed of a solid that displays ion conductivity. For example, an inorganic solid electrolyte such as the previously described sulfide inorganic solid electrolyte or an oxide inorganic solid electrolyte can be used.

Note that the electrode mixed material layer of the electrode may be a layer that corresponds to the presently disclosed solid electrolyte-containing layer.

### <Formation method of solid electrolyte-containing layer>

Examples of methods by which the solid electrolyte-containing layer may be formed on a substrate such as the current collector or electrode described above include:
(1) a method in which the presently disclosed slurry composition is applied onto the surface of a substrate (surface at the electrode mixed material layer-side in the case of an electrode; same applies below) and is then dried;
(2) a method in which a substrate is immersed in the presently disclosed slurry composition and is then dried; and
(3) a method in which the presently disclosed slurry composition is applied onto a releasable substrate and is dried to produce a solid electrolyte-containing layer that is then transferred onto the surface of an electrode or the like.

Of these methods, method (1) is particularly preferable since it allows simple control of the thickness of the solid electrolyte-containing layer. In more detail, method (1) includes a step (application step) of applying the slurry composition onto the substrate and a step (solid electrolyte-containing layer formation step) of drying the slurry composition that has been applied onto the substrate to form a solid electrolyte-containing layer.

### [Application step]

Examples of methods by which the slurry composition may be applied onto the substrate in the application step include, but are not specifically limited to, doctor blading, reverse roll coating, direct roll coating, gravure coating, extrusion coating, and brush coating.

### [Solid electrolyte-containing layer formation step]

The method by which the slurry composition on the substrate is dried in the solid electrolyte-containing layer formation step is not specifically limited and may be a commonly known method. Examples of drying methods that may be used include drying by warm, hot, or low-humidity air, drying in a vacuum, and drying by irradiation with infrared light, electron beams, or the like.

Note that in a case in which the solid electrolyte-containing layer is an electrode mixed material layer, the electrode mixed material layer is preferably subjected to pressing treatment by roll pressing or the like after drying. The pressing treatment enables further densification of the obtained electrode mixed material layer.

### (Electrode)

An electrode that is obtained by forming an electrode mixed material layer on a current collector using the presently disclosed slurry composition for an all-solid-state secondary battery includes an electrode mixed material layer that contains a sulfide inorganic solid electrolyte, a polymer serving as a binder, and an electrode active material and that optionally further contains one or more selected from the group consisting of a conductive material and other components, and this electrode can display excellent ion conductivity.

### (Solid electrolyte layer)

A solid electrolyte layer that is formed using the presently disclosed slurry composition for an all-solid-state secondary battery contains a sulfide inorganic solid electrolyte and a polymer serving as a binder, optionally further contains other components, and can display excellent ion conductivity. Note that the solid electrolyte layer normally does not contain an electrode active material.

### (All-solid-state secondary battery)

The presently disclosed all-solid-state secondary battery normally includes a positive electrode, a solid electrolyte layer, and a negative electrode, and a feature thereof is that at least one of a positive electrode mixed material layer of the positive electrode, a negative electrode mixed material layer of the negative electrode, and the solid electrolyte layer is the presently disclosed solid electrolyte-containing layer. In other words, the presently disclosed all-solid-state secondary battery includes at least one of: a positive electrode including a positive electrode mixed material layer that has been formed using a slurry composition for an all-solid-state secondary battery positive electrode serving as the presently disclosed slurry composition for an all-solid-state secondary battery; a negative electrode including a negative electrode mixed material layer that has been formed using a slurry composition for an all-solid-state secondary battery negative electrode serving as the presently disclosed slurry composition for an all-solid-state secondary battery; and a solid electrolyte layer that has been formed using a slurry composition for an all-solid-state secondary battery electrolyte layer serving as the presently disclosed slurry composition for an all-solid-state secondary battery.

Moreover, the presently disclosed all-solid-state secondary battery has excellent battery performance such as output characteristics as a result of including the presently disclosed solid electrolyte-containing layer.

Any electrode for an all-solid-state secondary battery can be used without any specific limitations in the presently disclosed all-solid-state secondary battery as an electrode for an all-solid-state secondary battery including an electrode mixed material layer that does not correspond to the presently disclosed solid electrolyte-containing layer.

Moreover, any solid electrolyte layer such as a solid electrolyte layer described in JP2012-243476A, JP2013-143299A, or JP2016-143614A, for example, can be used without any specific limitations in the presently disclosed all-solid-state secondary battery as a solid electrolyte layer that does not correspond to the presently disclosed solid electrolyte-containing layer.

The presently disclosed all-solid-state secondary battery can be obtained by stacking the positive electrode and the negative electrode such that the positive electrode mixed material layer of the positive electrode and the negative electrode mixed material layer of the negative electrode are in opposition via the solid electrolyte layer, optionally performing pressing to obtain a laminate, subsequently placing the laminate in a battery container in that form or after rolling, folding, or the like in accordance with the battery shape, and then sealing the battery container. Note that an expanded metal, an overcurrent preventing device such as a fuse or a PTC device, a lead plate, or the like may be placed in the battery container as necessary in order to prevent pressure increase inside the battery and occurrence of overcharging or overdischarging. The shape of the battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit formed through polymerization of a given monomer is normally, unless otherwise specified, the same as the ratio (charging ratio) of the given monomer among all monomers used in polymerization of the polymer.

Furthermore, in the examples and comparative examples, the following methods were used to measure and evaluate the weight-average molecular weight of a polymer, the dispersibility and preservation stability of a slurry composition, and the ion conductivity of a solid electrolyte-containing layer.

### <Weight-average molecular weight of polymer>

The weight-average molecular weight of a polymer was measured by first drying a binder composition produced in each example or comparative example and dissolving the dry polymer in a LiBr-DMF solution (lithium bromide-containing dimethylformamide solution) of 10 mM in concentration to prepare a solution, and then analyzing the prepared solution by gel permeation chromatography (GPC) under the following measurement conditions.
- Separation column: Shodex KD-806M (produced by Showa Denko K.K.)
- Detector: Differential refractometer RID-10A (produced by Shimadzu Corporation)
- Eluent flow rate: 0.3 mL/min
- Column temperature: 40°C
- Standard polymer: TSK standard polystyrene (produced by Tosoh Corporation)

### <Dispersibility of slurry composition>

The viscosity of a slurry composition was measured using a Brookfield B-type viscometer (60 rpm, 25°C) and was evaluated by the following standard. A smaller value for viscosity indicates that the slurry composition has better dispersibility.
A: Less than 3,000 mPa·s
B: Not less than 3,000 mPa·s and less than 4,000 mPa·s
C: Not less than 4,000 mPa·s and less than 5,000 mPa·s
D: Not less than 5,000 mPa·s or not dispersed (no fluidity)

### <Preservation stability of slurry composition>

Straight after production, 1 g of a slurry composition was dried by a 130°C hot plate for 1 hour to cause vaporization of solvent, and the initial solid content concentration (%) was measured.

Separately to the above, the slurry composition straight after production was also preserved in a hermetically sealed state at 25°C. After 1 week of preservation, 1 g of a supernatant of the slurry composition was sampled, and the post-preservation solid content concentration (%) was measured in the same way as the initial solid content concentration.

In addition, a solid content concentration maintenance rate was calculated (= post-preservation solid content concentration/initial solid content concentration × 100(%)). A larger solid content concentration maintenance rate indicates that there is less sedimentation of solid content and that the slurry composition has better preservation stability.
A: Solid content concentration maintenance rate of 90% or more
B: Solid content concentration maintenance rate of not less than 80% and less than 90%
C: Solid content concentration maintenance rate of not less than 50% and less than 80%
D: Solid content concentration maintenance rate of less than 50%

### <Ion conductivity of solid electrolyte-containing layer>

Inside of a glovebox (moisture content: 1 ppm or less), a slurry composition was dried by a 120°C hot plate, and the resultant powder was shaped into a circular tube shape of 10 mm in diameter and 1 mm in thickness to obtain a measurement sample. Li ion conductivity (25°C) was measured for this measurement sample by the alternating current impedance method and was evaluated by the following standard. A larger Li ion conductivity can be said to indicate that conductivity of the surface of a sulfide inorganic solid electrolyte is maintained well and that a solid electrolyte-containing layer produced using that slurry composition can display excellent ion conductivity. Note that the measurement was performed using a frequency response analyzer (produced by Solartron Analytical; product name: Solartron^{®} 1260 (Solartron is a registered trademark in Japan, other countries, or both) under measurement conditions of an applied voltage of 10 mV and a measurement frequency range of 0.01 MHz to 1 MHz.
A: Li ion conductivity of 1 mS/cm or more
B: Li ion conductivity of not less than 0.5 mS/cm and less than 1 mS/cm
C: Li ion conductivity of not less than 0.1 mS/cm and less than 0.5 mS/cm
D: Li ion conductivity of less than 0.1 mS/cm

### (Example 1)

### <Production of binder composition>

A 1 L septum-equipped flask (reactor) that included a stirrer was charged with 90 parts of deionized water and 0.5 parts of sodium lauryl sulfate as an emulsifier. The gas phase was purged with nitrogen gas, the temperature was raised to 60°C, and then 0.3 parts of ammonium persulfate (APS) as a polymerization initiator was dissolved in 20.0 parts of deionized water and was added into the flask.

Meanwhile, a monomer composition was obtained in a separate vessel (emulsion vessel) by mixing 30 parts of deionized water, 0.5 parts of sodium lauryl sulfate as an emulsifier, 15 parts of styrene as an aromatic monomer, 55 parts of n-butyl acrylate as a first (meth)acrylic acid alkyl ester monomer, 24.5 parts of ethyl acrylate as a second (meth)acrylic acid alkyl ester monomer, and 5.5 parts of acrylonitrile as a vinyl cyanide monomer. The monomer composition was continuously added into the 1 L septum-equipped flask over 3 hours to perform polymerization. The reaction was carried out at 60°C during addition. Once the addition was complete, a further 2 hours of stirring was performed at 80°C to yield a water dispersion of a polymer.

Next, an appropriate amount of n-octyl acetate as an acetic acid ester solvent was added to the obtained water dispersion of the polymer so as to obtain a mixture. Thereafter, distillation was performed under reduced pressure at 80°C to remove water and excess n-octyl acetate from the mixture, and thereby obtain a binder composition (solid content concentration: 10%). The obtained binder composition was used to measure the weight-average molecular weight of the polymer. The result is shown in Table 1.

### <Production of slurry composition>

A slurry composition was produced through multistage mixing and kneading as described below.

### [Premixing step]

Mixing was performed with respect to 100 parts of sulfide glass formed of Li₂S and P₂S₅ (Li₂S/P₂S₅ = 70 mol%/30 mol%; average primary particle diameter: 1.0 µm) as a sulfide inorganic solid electrolyte and 2 parts (in terms of solid content) of the binder composition described above (mixing treatment 1). n-Octyl acetate was then added to a mixture that was obtained through the mixing treatment 1 to produce a composition having a solid content concentration of 80%. This composition was mixed at 2,000 rpm using a planetary centrifugal mixer (product name: THINKY MIXER^{®} (THINKY MIXER is a registered trademark in Japan, other countries, or both) ARE310); same applies below) for 2 minutes (mixing treatment 2). n-Octyl acetate was then added to a mixture that was obtained through the mixing treatment 2 to produce a composition having a solid content concentration of 70%. This composition was mixed at 2,000 rpm using the planetary centrifugal mixer for 2 minutes (mixing treatment 3).

### [First dilution step]

Next, n-octyl acetate was added to a mixture (premix) having a solid content concentration of 70% that was obtained in the mixing treatment 3 to produce a composition (first dilution) having a solid content concentration of 65%.

### [Kneading step]

The first dilution having a solid content concentration of 65% that was obtained through the first dilution step was kneaded at 2,000 rpm using the planetary centrifugal mixer for 2 minutes (kneading treatment 1). n-Octyl acetate was then added to a mixture that was obtained through the kneading treatment 1 to produce a composition having a solid content concentration of 60%. This composition was mixed at 2,000 rpm using the planetary centrifugal mixer for 2 minutes (kneading treatment 2). n-Octyl acetate was then added to a mixture (solid content concentration 60%) that had been obtained through the kneading treatment 2 to produce a composition having a solid content concentration of 55%. This composition was kneaded at 2,000 rpm using the planetary centrifugal mixer for 2 minutes (kneading treatment 3).

### [Second dilution step]

In addition, n-octyl acetate was added to a mixture (kneaded product) that had been obtained through the kneading treatment 3 to produce a composition (second dilution) having a solid content concentration of 50%.

This composition was mixed at 2,000 rpm using the planetary centrifugal mixer for 2 minutes to produce a slurry composition (solid content concentration: 50%).

The obtained slurry composition was used to perform evaluations of dispersibility, preservation stability, and ion conductivity. The results are shown in Table 1.

### (Example 2)

Various operations, measurements, and evaluations were performed in the same way as in Example 1 with the exception that in production of the binder composition and production of the slurry composition, all n-octyl acetate was changed to n-heptyl acetate. The results are shown in Table 1.

### (Example 3)

Various operations, measurements, and evaluations were performed in the same way as in Example 1 with the exception that in production of the binder composition, 55 parts of n-butyl acrylate as a first (meth)acrylic acid alkyl ester monomer was changed to 55 parts of 2-ethylhexyl acrylate. The results are shown in Table 1.

### (Example 4)

Various operations, measurements, and evaluations were performed in the same way as in Example 1 with the exception that in production of the binder composition and production of the slurry composition, all n-octyl acetate was changed to n-nonyl acetate. The results are shown in Table 1.

### (Example 5)

Various operations, measurements, and evaluations were performed in the same way as in Example 1 with the exception that in production of the binder composition and production of the slurry composition, all n-octyl acetate was changed to n-hexyl acetate. The results are shown in Table 1.

### (Example 6)

Various operations, measurements, and evaluations were performed in the same way as in Example 1 with the exception that in production of the binder composition, the amount of styrene as an aromatic monomer was changed from 15 parts to 20 parts, the amount of n-butyl acrylate as a first (meth)acrylic acid alkyl ester monomer was changed from 55 parts to 53 parts, and the amount of ethyl acrylate as a second (meth)acrylic acid alkyl ester monomer was changed from 24.5 parts to 21.5 parts. The results are shown in Table 1.

### (Example 7)

Various operations, measurements, and evaluations were performed in the same way as in Example 1 with the exception that in production of the binder composition, the amount of styrene as an aromatic monomer was changed from 15 parts to 22.5 parts, the amount of n-butyl acrylate as a first (meth)acrylic acid alkyl ester monomer was changed from 55 parts to 49 parts, and the amount of ethyl acrylate as a second (meth)acrylic acid alkyl ester monomer was changed from 24.5 parts to 23 parts. The results are shown in Table 1.

### (Example 8)

Various operations, measurements, and evaluations were performed in the same way as in Example 1 with the exception that in production of the binder composition, the amount of styrene as an aromatic monomer was changed from 15 parts to 14 parts, and the amount of acrylonitrile as a vinyl cyanide monomer was changed from 5.5 parts to 6.5 parts. The results are shown in Table 1.

### (Example 9)

Various operations, measurements, and evaluations were performed in the same way as in Example 1 with the exception that in production of the binder composition, the amount of styrene as an aromatic monomer was changed from 15 parts to 17 parts, and the amount of acrylonitrile as a vinyl cyanide monomer was changed from 5.5 parts to 3.5 parts. The results are shown in Table 1.

### (Example 10)

Various operations, measurements, and evaluations were performed in the same way as in Example 1 with the exception that in production of the binder composition, the amount of ammonium persulfate (APS) as a polymerization initiator was changed from 0.3 parts to 0.35 parts. The results are shown in Table 1.

### (Example 11)

Various operations, measurements, and evaluations were performed in the same way as in Example 1 with the exception that in production of the binder composition, the amount of ammonium persulfate (APS) as a polymerization initiator was changed from 0.3 parts to 0.2 parts. The results are shown in Table 1.

### (Example 12)

Various operations, measurements, and evaluations were performed in the same way as in Example 1 with the exception that in production of the binder composition and production of the slurry composition, all n-octyl acetate was changed to 2-ethylhexyl acetate. The results are shown in Table 1.

### (Comparative Example 1)

Various operations, measurements, and evaluations were performed in the same way as in Example 1 with the exception that in production of the binder composition and production of the slurry composition, all n-octyl acetate was changed to n-decyl acetate. The results are shown in Table 1.

### (Comparative Example 2)

Various operations, measurements, and evaluations were performed in the same way as in Example 1 with the exception that in production of the binder composition and production of the slurry composition, all n-octyl acetate was changed to n-pentyl acetate. The results are shown in Table 1.

### (Comparative Example 3)

Various operations, measurements, and evaluations were performed in the same way as in Example 1 with the exception that in production of the binder composition, the amount of styrene as an aromatic monomer was changed from 15 parts to 26.5 parts, the amount of n-butyl acrylate as a first (meth)acrylic acid alkyl ester monomer was changed from 55 parts to 50 parts, and the amount of ethyl acrylate as a second (meth)acrylic acid alkyl ester monomer was changed from 24.5 parts to 18 parts. The results are shown in Table 1.

### (Comparative Example 4)

Various operations, measurements, and evaluations were performed in the same way as in Example 1 with the exception that in production of the binder composition, the amount of styrene as an aromatic monomer was changed from 15 parts to 19.5 parts, the amount of n-butyl acrylate as a first (meth)acrylic acid alkyl ester monomer was changed from 55 parts to 50 parts, and the amount of ethyl acrylate as a second (meth)acrylic acid alkyl ester monomer was changed from 24.5 parts to 25 parts. The results are shown in Table 1.

### (Comparative Example 5)

Various operations, measurements, and evaluations were performed in the same way as in Example 1 with the exception that in production of the binder composition and production of the slurry composition, all n-octyl acetate was changed to n-butyl butyrate (not an acetic acid ester solvent). The results are shown in Table 1.

In Table 1, shown below:
"BA" indicates n-butyl acrylate unit;
"2EHA" indicates 2-ethylhexyl acrylate unit;
"EA" indicates ethyl acrylate unit;
"AN" indicates acrylonitrile unit;
"ST" indicates styrene unit;
"Carbon number" indicates carbon number of alkyl group or hydrocarbon group bonded to non-carbonyl oxygen atom;
"Mass ratio of first relative to second" indicates mass ratio of first (meth)acrylic acid alkyl ester monomer unit relative to second (meth)acrylic acid alkyl ester monomer unit; and
"Total proportional content of first and second" indicates total proportional content of first (meth)acrylic acid alkyl ester monomer unit and second (meth)acrylic acid alkyl ester monomer unit.

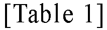

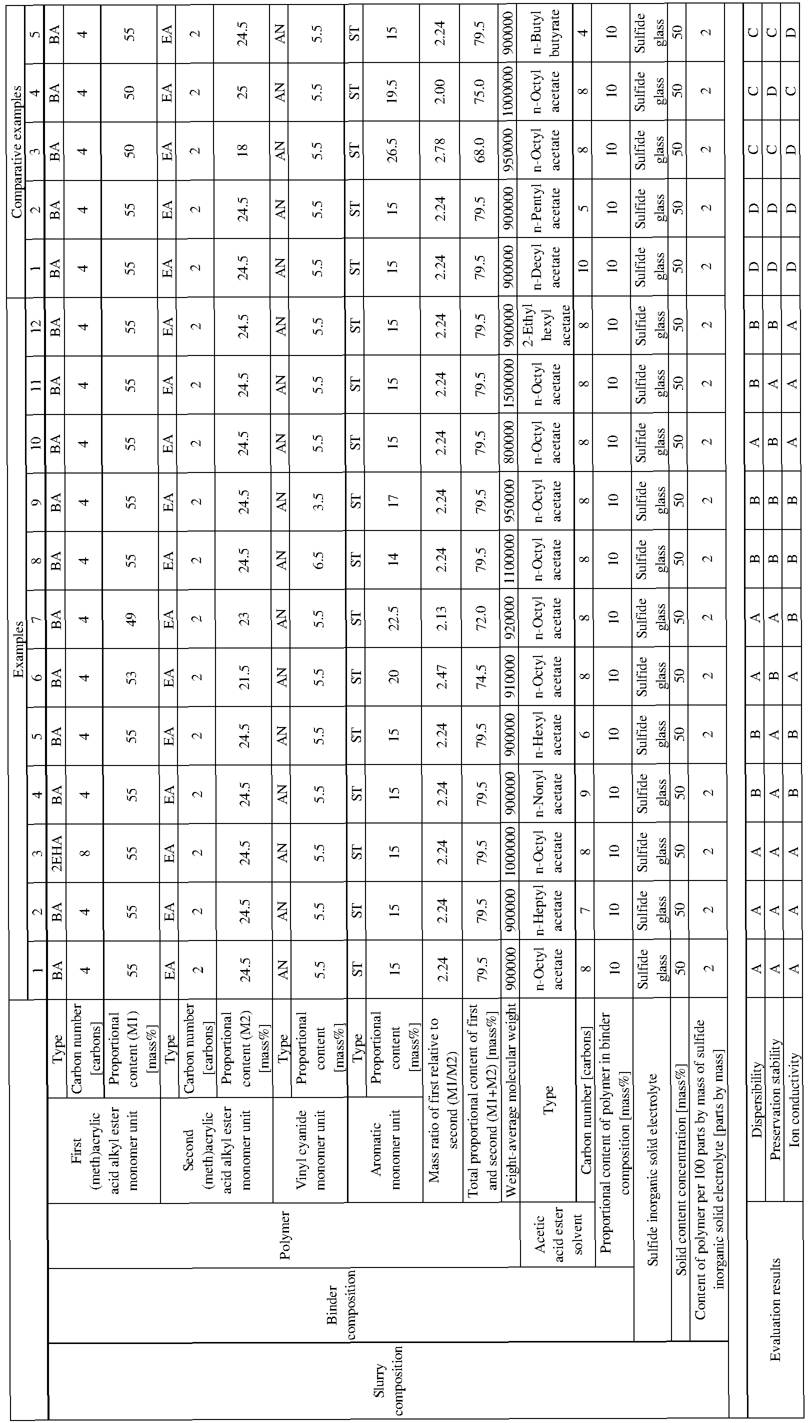

As can clearly be seen from Table 1, the binder compositions of the examples can impart excellent dispersibility and preservation stability to a slurry composition in which a sulfide inorganic solid electrolyte is used as a solid electrolyte and can also cause a solid electrolyte-containing layer formed using the slurry composition to display excellent ion conductivity.

### INDUSTRIAL APPLICABILITY

According to the present disclosure, it is possible to provide a binder composition for an all-solid-state secondary battery that can impart excellent dispersibility and preservation stability to a slurry composition for an all-solid-state secondary battery in which a sulfide inorganic solid electrolyte is used as a solid electrolyte and that can also cause a solid electrolyte-containing layer formed using the slurry composition for an all-solid-state secondary battery to display excellent ion conductivity.

Moreover, according to the present disclosure, it is possible to provide a slurry composition for an all-solid-state secondary battery that has excellent dispersibility and preservation stability and that can also form a solid electrolyte-containing layer having excellent ion conductivity.

Furthermore, according to the present disclosure, it is possible to provide a solid electrolyte-containing layer that has excellent ion conductivity and an all-solid-state secondary battery that includes the solid electrolyte-containing layer.

## Claims

1. A binder composition for an all-solid-state secondary battery in which a sulfide inorganic solid electrolyte is used, comprising:
a polymer including a (meth)acrylic acid alkyl ester monomer unit; and
an acetic acid ester solvent in which a hydrocarbon group having a carbon number of not less than 6 and not more than 9 is bonded to a non-carbonyl oxygen atom, wherein
the (meth)acrylic acid alkyl ester monomer unit includes a first (meth)acrylic acid alkyl ester monomer unit in which an alkyl group having a carbon number of not less than 3 and not more than 8 is bonded to a non-carbonyl oxygen atom and a second (meth)acrylic acid alkyl ester monomer unit in which an alkyl group having a carbon number of not less than 1 and not more than 2 is bonded to a non-carbonyl oxygen atom, and
a mass ratio of the first (meth)acrylic acid alkyl ester monomer unit relative to the second (meth)acrylic acid alkyl ester monomer unit is not less than 2.1 and not more than 2.5.

2. The binder composition for an all-solid-state secondary battery according to claim 1, wherein the polymer further includes a vinyl cyanide monomer unit.

3. The binder composition for an all-solid-state secondary battery according to claim 2, wherein proportional content of the vinyl cyanide monomer unit when all repeating units forming the polymer are taken to be 100 mass% is not less than 3 mass% and less than 7 mass%.

4. The binder composition for an all-solid-state secondary battery according to any one of claims 1 to 3, wherein the polymer has a weight-average molecular weight of not less than 800,000 and not more than 1,500,000.

5. The binder composition for an all-solid-state secondary battery according to any one of claims 1 to 4, wherein
the polymer further includes an aromatic monomer unit, and
proportional content of the aromatic monomer unit when all repeating units forming the polymer are taken to be 100 mass% is not less than 10 mass% and not more than 30 mass%.

6. The binder composition for an all-solid-state secondary battery according to any one of claims 1 to 5, wherein total proportional content of the first (meth)acrylic acid alkyl ester monomer unit and the second (meth)acrylic acid alkyl ester monomer unit when all repeating units forming the polymer are taken to be 100 mass% is not less than 50 mass% and not more than 85 mass%.

7. A slurry composition for an all-solid-state secondary battery comprising:
the binder composition for an all-solid-state secondary battery according to any one of claims 1 to 6; and
a sulfide inorganic solid electrolyte.

8. A solid electrolyte-containing layer formed using the slurry composition for an all-solid-state secondary battery according to claim 7.

9. An all-solid-state secondary battery comprising the solid electrolyte-containing layer according to claim 8.
